# EUROPEAN PATENT SPECIFICATION

(11) **EP 3 278 908 B1**
(45) Date of publication and mention of the grant of the patent: **08.01.2020**
(21) Application number: 16182371.1
(22) Date of filing: 02.08.2016
(51) Int. Cl.: B33Y 10/00, B22F 3/105, B29C 64/153, B29C 64/40, B33Y 40/00, B28B 1/00

(54) **SUPPORT STRUCTURE, METHOD OF PROVIDING THE SAME AND METHOD OF ADDITIVELY MANUFACTURING**
STÜTZSTRUKTUR, VERFAHREN ZUR BEREITSTELLUNG DAVON UND VERFAHREN ZUR ADDITIVEN FERTIGUNG
STRUCTURE DE SUPPORT, SON PROCÉDÉ DE PRODUCTION ET PROCÉDÉ DE FABRICATION DE MANIÈRE ADDITIVE

(43) Date of publication of application: 07.02.2018
(73) Proprietor: Siemens Aktiengesellschaft, 80333 München (DE)
(72) Inventor: Rule, David, 10115 Berlin (DE); Seyfert, Christoph, 14542 Werder / Havel (DE)

(56) References cited:
- WO-A1-2015/141032
- DE-A1- 19 538 257
- DE-A1-102014 224 042
- GB-A- 2 458 745
- US-A- 5 897 825
- US-A1- 2004 075 196
- US-A1- 2016 107 234
- Anonymous: "An Introductory Guide to SLS 3D Printing", , 29 November 2018 (2018-11-29), XP055528305, Retrieved from the Internet: URL:https://formlabs.com/blog/what-is-sele ctive-laser-sintering/ [retrieved on 2018-11-29]

## Description

The present invention relates to a support structure for a powder bed based manufacturing process and a corresponding method of providing or establishing said support structure. Further, the present invention relates to a method of additively manufacturing a component.

The mentioned "component" may be any ceramic and/or metallic component. Preferably, the component may pertain to a component of a turbine, such as flow path hardware of a gas turbine. To this effect, said component may be made of a superalloy, such as nickel- and/or cobalt-based superalloy. Said alloy may in turn be a precipitation strengthened alloy.

The term "additive" in the context of manufacturing shall particularly denote a layer-wise, generative and/or bottom-up manufacturing process.

Powder bed manufacturing methods such as selective laser melting (SLM), electron beam melting (EBM) as well as selective laser sintering (SLS) are relatively well known methods for fabricating, prototyping or manufacturing parts or components, e.g. from a powdery base material. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper or roll that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the geometry of the component to be manufactured.

Said component is preferably manufactured or to be manufactured by means of SLM.

A method of selective laser melting is known from EP 2 601 006 B1, for example.

It is known that, e.g. in the SLM based manufacturing, protruding or downwardly facing surfaces, i.e. surfaces being perpendicular to the build direction must be supported by support structures if the mentioned "protrusion" exceeds a certain limit. Prior art support structures are known for instance from US 5,897,825, WO 2014/174090 A2, GB 2458745 A and US 6,193,923 B1. As a drawback, the mentioned support structures have to be removed from the structure of the component after the buildup, as these structures are unwanted and only applied auxiliarily. Thus, the mentioned support structure significantly complicates the additive manufacture of a respective component in general. Further, the mentioned support structures are often very difficult to access as they may be thin and encapsulated between the component and a base platform for example.

Usually, the mentioned support structures are removed or disconnected from the as manufactured component by means of conventional machining techniques. Thereby, the component may be exposed to significant mechanical stresses or tensions, which may adversely affect the manufacturing result. Particularly, said stresses or mechanical impacts may lead to distortion and, possibly, to waste of the component.

It is, thus, an object of the present invention to provide means which allow for an easy removal of support structures, particularly in the field of powder bed additive manufacturing. In this way, a novel and advantageous support structure is provided.

The mentioned object is achieved by the subject-matters of the independent claims. Advantageous embodiments are subject-matter of the dependent claims.

An aspect of the present invention relates to a support structure for a powder-bed-based (additive) manufacturing process comprising a first domain with a first density and a second domain with a second density, wherein a material of the second domain comprises a predetermined porosity such that the second density is lower than the first density. The first domain is arranged to provide a supporting scaffold of the support structure, while the second domain extends in interspaces of the scaffold and provides for an abradable filler.

In an embodiment, the material of the second domain comprises a greater porosity than the material of the first domain.

The term "domain" may relate to a region or area within the material of the support structure. When it is referred to a respective domain, it may as well be referred to the respective material of that domain. Within one domain, i.e. the first and/or the second domain respectively, the material properties are preferably similar or the same. The material of the first domain and the material of the second domain are solid bodies.

The term "density" preferably relates to a mass of volume density of the respective material of said first and/or second domain. The term "density" as used herein does preferably not necessarily denote a physical or specific density. E.g., the material of the first and the second domain may be the same, whereas the density of the respective material as a whole may differ. This may be the case as the porosity of the first and the second material are different according to the present invention.

In an embodiment, the first domain comprises a first porosity and the second domain comprises a second porosity, wherein the second porosity is greater than the first porosity, e.g. a porosity twice as high as the one of the first domain.

In an embodiment, the first domain comprises a first abradability and the second domain comprises a second abradability, wherein the second abradability is greater than the first abradability. Said abradability preferably relates to a quantity, which is specific for and depending on the respective abrasive means, such as an abrasive fluid.

The first domain and the second domain are further arranged and configured such that the support structure can be removed from an adhered component, e.g. adhered during a corresponding powder bed additive manufacturing process, by abrasive flow machining.

The presented concept of support structure may pertain to a smart combined material which can be easily removed from the adhered component, while - at the same time - provides for the sufficient or expedient stability or support for the mentioned manufacturing process.

As the support structure is - according to the present invention - advantageously removable by means of the described flow machining, a means is provided by which only a low stress is applied to the as-manufactured component when the support is removed. This is because flow machining techniques are very soft machining techniques and usually applied in surface finishing, such as polishing, only. With the presented approach, however, the support structure may - due to its inherent porosity - be removed by flow machining of flow abrasion.

In an embodiment, the first domain or the respective material is provided by sintering, such as selective laser sintering.

In an embodiment, the second domain or the respective material is provided by sintering, such as selective laser sintering.

In an embodiment, the second domain or the respective material comprises a (significantly) greater surface-to-volume ratio then the first domain. This, particularly, allows for a fluid for abrasion of the support structure to enter the domain and the interspaces of the material and effect an abrasion or erosion of the support structure in order to remove it.

In an embodiment, the first domain is arranged at an outside of the support structure.

In an embodiment, the second domain is arranged inside the first domain and/or at an inside of the support structure.

This allows providing for a rigid wall or shell for supporting the component which is to be manufactured on top of the support structure. At the same time, an abrasive material is provided in the inside of the support structure which may e.g. be removed by flow abrasion after the mentioned component has been completely buildup or finished. In this way, the flow can expediently enter to the second domain, e.g. via an opening or recess in the material of the first domain. According to this embodiment, the mentioned wall extends preferably in a direction parallel to the buildup direction as mentioned.

In an embodiment, the material of the first domain and a material of the second domain of the support structure are intermixed. In other words, the mentioned materials and/or domains may be engaged or interlocked. This embodiment of the support structure, particularly allows for an improved stability such that a component which is to be additively manufactured can expediently be supported during the manufacture. In an embodiment, the material of the first domain is arranged in a mesh or in a mesh-like fashion. According to this embodiment, the second domain or the respective material may be disposed in interspaces of said mesh. Thus, the mesh may serve for a supporting frame for the support structure, while the second domain or its material may function as an abradable filler material.

According to the invention, the first domain is arranged and configured to provide for a supporting or stabilising scaffold of the support structure, where the second domain extends in interspaces of that scaffold and provides for an abradable filler material. Accordingly, a smart geometry is provided solving the described problems. A further aspect of the present invention relates to a method of providing or establishing the support structure for the powder bed manufacturing process. Said method comprises (additively) building up the support structure on a base platform, e.g. for the additive manufacturing process, wherein the first domain and the second domain are built-up by sintering, such as selective laser sintering.

In an embodiment, the material of the first domain is sintered at different sinter parameter(s), such as a higher sintering temperature and/or a greater sintering pressure than the material of the second domain. By this means, the first domain or its material, may advantageously be awarded with a strong rigidity. In other words, a strong bond or cohesion of the material of the first domain may be provided. At the same time, the material of the second domain may be provided or established only with a weak bond such that the material of the second domain is provided with a favorable great abradability and the domain may be accessible to and entered by a machining fluid for the removal.

A further aspect of the present invention relates to a method of additively manufacturing a component by a powder bed process comprising the providing of the support structure as described and, additively building up the component by the powder bed process on the support structure. The method of manufacturing further comprises removing the support structure by abrasive flow machining as described. The removal of the support structure is preferably performed at least partly or predominantly by abrasive flow machining.

In an embodiment, the abrasive flow machining uses a pressurised fluid, such as a liquid for abrasion or erosion of the material of the support structure, more particularly the material of the first domain and/or the material of the second domain, for example.

In an embodiment, a material of the second domain is removed by abrasive flow machining in a first step.

In an embodiment, the material of the first domain is removed in a second step by any other means, such as conventional techniques known to a skilled person.

Alternatively, the material of the first domain may as well be removed by abrasive flow machining, such as the material of the second domain as described. In this way, it may in general be possible to remove the material of the second domain by flow abrasion, as the material may be present only as a mesh, lattice or wall structure as described and, thus, may be susceptible to the flow abrasion. In other words, the material of the second domain may - after the removal of the material of the first domain - be easier accessible to the flow or abrasive media.

A further aspect of the present invention relates to a use of abrasive flow machining for the removal of the support structure in the additive manufacture of components, e.g. by means of powder bed processes.

Also described is an apparatus for additive manufacturing comprising a flow means for applying an abrasive flow medium, such as a flux or slurry, to the support structure (as described), wherein the flow means comprises at least one reservoir retaining the flow medium and a drive for applying the medium to the support structure. Preferably, the flow means and/or the apparatus comprises two separate reservoirs allowing for a circulating of the flow medium, e.g. back and forth, thereby contacting and abrading the support structure.

Further described is an additive manufacturing device comprising the apparatus, further comprising a manufacturing unit for selective laser melting and a manufacturing unit for selective laser sintering. Said units may be embodied separately or integrally.

The term "sintering" as used herein shall preferably mean, that a respective base material to be sintered is not completely melted above the melting temperature of the base material but only heated below and pressurized in order to obtain a solid non-powdery structure. On the contrary, the SLM process normally applies temperatures above the melting point of the base material, such that the material is melted first and subsequently solidified (cf. above).

Advantages relating to the described support structure, the apparatus and/or the device may as well pertain to the described method of providing the support structure and/or the method of additive manufacturing.

Further features, expediencies and advantageous refinements become apparent from the following description of the exemplary embodiment in connection with the Figures.
- Figure 1: shows a schematic side or sectional view of the component in the support structure built or being built on a platform by means of selective laser melting.
- Figure 2: shows - at least in parts - a schematic side or sectional view of a support structure not part of the present invention.
- Figure 3: shows - at least in parts - a schematic side or sectional view of the support structure according to an embodiment of the present invention.
- Figure 4: shows - at least in parts - a schematic side or sectional view of another support structure not part of the present invention.
- Figure 5: indicates by means of a schematic flow chart, method steps of an additive manufacturing method according to the present invention.
- Figure 6: indicates schematically by means of a side or sectional image at least parts of a method of additively manufacturing of the component.
- Figure 7: indicates schematically an additive manufacturing device.

Like elements, elements of the same kind and identically acting elements may be provided with the same reference numerals in the Figures.

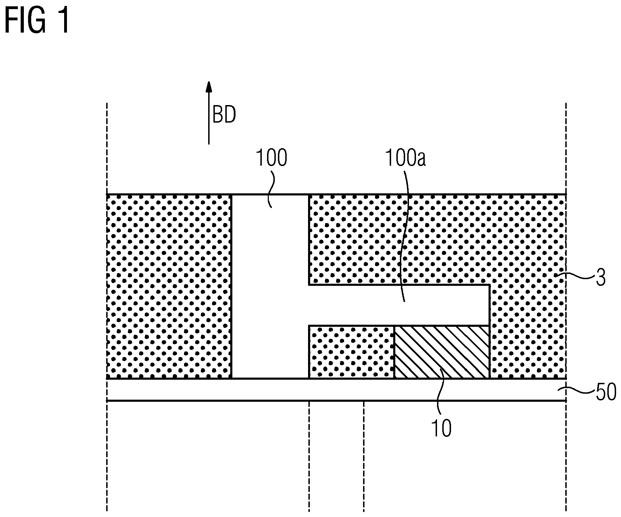

Figure 1 indicates schematically a powder bed additive manufacturing process, wherein a component 100 is built or being built in a layerwise fashion, particularly by means of selective laser melting (SLM), selective laser sintering (SLS) or electron beam melting (EBM), for example. Said process as indicated in Figure 1 may be a conventional manufacturing process.

In the mentioned processes, the component is formed from a base material 3, preferably a powdery base material. For the manufacture, the base material 3 is disposed layerwise on a platform 50. Subsequently, the provided layer is scanned over by a solidification unit (not explicitly indicated), such as a laser or electron beam unit. The powdery layer is then melted at locations which may be predetermined by a CAD file, for example and subsequently solidified to form part of the component 100. For the manufacture of a subsequent layer, the platform 50 is preferably lowered by a distance corresponding to the final layer thickness. In this way, the component 100 is built layerwise according to a predetermined build direction BD as shown in Figure 1.

The component 100 is preferably a metallic or ceramic component, more particularly a component of a turbo machine, such as a gas turbine. The component may as well be a material compound. The component 100 may be a turbine blade or vane or any other component applied in the flow path of gas turbines for example. Accordingly, the component 100 may be a turbine blade or vane.

The component 100 comprises a protruding section 100a. Said section may be present due to the desired geometry requirements for a specific application of the component 100. In order to manufacture the component 100 with such protrusions or overhanging sections, the respective (protruding) section has to be supported for the manufacture by a support structure 10. This holds actually at least for the SLM and the EBM process. Without the support structure 10, the component 100 could not be melted and thus solidified in a reliable fashion.

In the powder bed manufacture of components, said component is metallurgically connected to the platform 50. Further, the component is of course also adhesively connected to the support structure 10. Apart from the indication in Figure 1, the support structure 10 may be provided at any interface section between the component 100 and the platform 50.

As, of course, only the component is desired, the auxiliary support structure 10 has to be removed after the manufacture has been finished. This is usually a complicated step as the support structure may be difficult to access from an outside as well as difficult to remove at all, e.g. by conventional machining means.

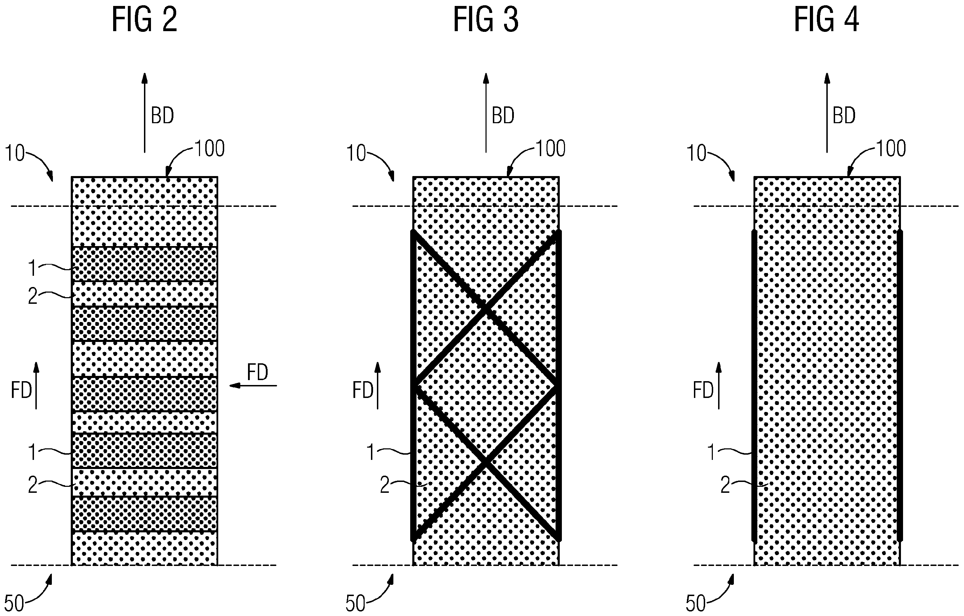

The support structure 10 as described in Figures 2 to 4 for example, offers the advantage to be removable by means of flow machining techniques. Such techniques are usually not sufficient to remove bulky, dense or conventional support materials. Flow machining techniques are usually only applicable for surface finishing or polishing effects or machining with very low abrasion rates.

An embodiment of the inventive support structure 10 is shown in Figure 3 in the following. The support structures 10 in Figures 2 and 4 are alternative support structures not falling within the scope of the claims.

Said Figures respectively show the support structure 10 being sandwiched between the platform 50 and the actual component 100 which is to be manufactured on top of the support structure 10.

The inventive support structure 10 comprises the first domain 1 with a first density or porosity and the second domain 2 with a second density or porosity, wherein the first density is greater than the second density. Conversely, the porosity of the second domain 2 is greater than that one of the first domain 1.

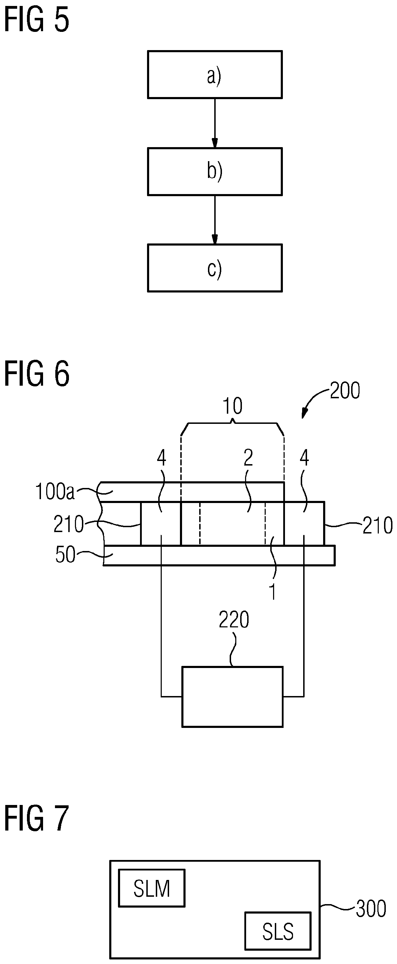

Anyway, the support structure is configured, i.e. the first and the second domain are arranged and configured such that the support structure as a whole can be easily removed from the adhered component (and preferably as well from an adhered platform) by abrasive flow machining. Said flow machining technique may be conventional technique, e.g. using a pressurised fluid, such as air or any abrasive liquid (cf. Figure 6 below).

Particularly, the term "fluid" as used herein may denote a liquid or gaseous medium. Further, the term "fluid" may denote any combination or dispersion of two or more material phases or aggregation states selected from solid, liquid and gaseous. For example, said fluid may be an emulsion, foam, suspension, aerosol, such as a fog or smoke or gaseous mixture, for example. To this effect, the mentioned fluid may be novel and adapted to the particular needs in the removal of support structures or the additive manufacture in general.

A particular advantage of the use of abrasive flow machining for the removal of support structures is that almost no stresses have to be applied to the component for the removal of the support structure.

The first and the second domain are preferably configured or its material is chosen such that the second domain 2 or its material has preferably a greater abradability to the respective abrasive medium than the material of the first domain 1. Expediently, the presented support structure, nevertheless, provides for the required stability in order to reliably or expediently support the component during its manufacture.

The material of the second domain may be too weak as to allow for a sufficient support. Thus, the second domain may be provided in order to award the support structure with the required stability.

Figure 2 particularly shows the support structure 10 according to a first embodiment in which the mentioned first and second domain 1, 2 are arranged or stacked alternately in the respective stack. Thus, when exposed to an abrasive flow medium, the support structure 10 may be easily abrasively removed. More particularly, the material of the second domain 2 may - due to its greater abradability or porosity or lower density - be removed faster and at a greater rate such that the whole support structure 10 at first decomposes into several pieces, whereby the support structure 10 as a whole is removed and the component 100 is released.

Figure 3 shows an embodiment of the support structure 10 in which the first domain 1 is arranged at an outside of the structure 10 and the second domain 2 is arranged inside the first domain 1 or in an inside of the structure 10. Thus, the first domain 1 may serve as a supporting mesh or scaffold, while the material of the second domain 2 (of greater porosity or abradability) is filled or disposed in interspaces of the mesh or scaffold formed from the material of the first domain 1. In this way, the first domain 1 and the second domain 2 are intermixed or engaged.

For an expedient removal of the support structure 10 as a whole, the second domain is preferably exposed to the flow medium in a first step. Then, in a second step, also the first domain may be removed, e.g. by any suitable means. The material of the second domain 2 may further be removed by the mentioned abrasive flow means as well, as it is now, i.e. after the removal of the first domain material, accessible to the flow medium with a larger surface.

Preferably, the material of the second domain has inherently a greater surface to volume ratio than the material of the first domain in order to be effectively abrasively removed or machined.

Figure 4 shows an embodiment, wherein the first domain 1 is disposed at an outside of the support structure 10. The first domain 1 further surrounds the second domain 2, wherein no intermixing of the first and the second domain is contemplated.

According to the embodiments of the support structure 10 pursuant to Figures 3 and 4, the first domain 1 has to be exposed to a machining flow in order to be effectively removed.

The support structure 10 is preferably built by selective laser sintering or any other sintering technique. In order to provide the support structure 10 with the mentioned porosity, the first domain material, or the respective base material thereof is preferably sintered at a higher laser power, temperature and/or pressure than the material of the second domain, for example. In this way, the material of the first domain may particularly be solidified to a denser and more compact structure and provided with a greater density and preferably a lower porosity as compared to the material of the second domain.

Figure 5 shows an inventive method of additively manufacturing the component 100 by a powder bed process, as described in Figure 1.

In step a), the support structure 10 is provided as described above (cf. Figure 3 for example) .

The process step indicated by numeral b) describes the additive building up or manufacturing of the structure for the component 100 by the described powder bed manufacturing process (e.g. SLM) on the support structure 10 (cf. Figure 1).

Process step c) indicates the removal of the support structure 10 at least in parts by the abrasive flow machining as described above.

In Figure 6, particularly, the step of removing the inventive support structure from the platform 50 and the component 100 is indicated in more detail.

Particularly an apparatus 200 is shown at least in parts. Further, an exemplary overhanging or protruding section 100a of the component (as described in Figure 1) is shown being supported by the inventive support structure 10.

The apparatus 200 may be novel and specifically designed for an application in the additive manufacture, such as in SLM-devices, for example. The apparatus 200 comprising a flow means 210 for applying an abrasive flow medium, such as a flux or slurry to the support structure 10, preferably at accessible sidewalls thereof.

Said flow means 210 may comprise a reservoir 220 as shown in Figure 6. Although not being explicitly indicated in Figure 6, the flow means 210 may comprise two separate reservoirs, each of which retaining a certain volume of abrasive medium. For the removal by abrasion, said medium has finally to be applied or brought into contact to the support structure 10. In this way, the apparatus 200 and/or the flow means 210 comprises a drive, such as a pump or similar means for pressurising the mentioned abrasive flow medium. The flow means 210 may be configured such that said abrasive flow may be circulated back and forth, e.g. between respective reservoirs and passing the sidewalls of the support structure for the removal of the same.

Figure 7 shows an additive manufacturing device 300. The device 300 comprising the apparatus 200 as described in Figure 6, further comprising a manufacturing unit for selective laser melting (SLM) and a manufacturing unit for selective laser sintering (SLS). Said units may be embodied separately or integrally in the described device 300.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Support structure (10) for a powder bed manufacturing process comprising a first domain (1) with a first density and a second domain (2) with a second density, wherein a material of the second domain (2) comprises a predetermined porosity such that the second density is lower than the first density, wherein the first domain (1) is arranged to provide a supporting scaffold of the support structure (10), while the second domain (2) extends in interspaces of the scaffold and provides for an abradable filler, wherein the material of the first domain (1) and the material of the second domain (2) are solid bodies, and wherein the first domain (1) and the second domain (2) are arranged and configured such that the support structure (10) can be removed from an adhered component (100) by abrasive flow machining.

2. Support structure (10) according to Claim 1, wherein the material of the second domain (2) comprises a greater porosity than a material of the first domain (1).

3. Support structure (10) according to one of the previous Claims, wherein the first domain is arranged at an outside of the support structure and the second domain is arranged inside the first domain.

4. Support structure (10) according to one of the previous Claims, wherein a material of the first domain and a material of the second domain of the support structure (10) are intermixed.

5. Support structure (10) according to one of the previous Claims, wherein the first domain (1) is arranged in a mesh.

6. Method of providing a support structure (10) for a powder bed manufacturing process according to one of the previous Claims comprising building up the support structure (10) on a base platform (50), wherein the first domain (1) and the second domain (2) are built up by sintering, such as selective laser sintering.

7. Method according to claim 6, wherein a material of the first domain is sintered at different sinter parameters, such as a higher sintering temperature and/or a greater pressure than a material of the second domain.

8. Method of additively manufacturing a component (100) by a powder bed process comprising:
- providing of a support structure (10) according to Claim 6 or 7,
- additively building up the component (100) by the powder bed process on the support structure (10), and
- removing the support structure (10) by abrasive flow machining.

9. Method according to Claim 8, wherein the abrasive flow machining uses a pressurised fluid for abrasion of a material of the support structure (10).

10. Method according to claim 8 or 9, wherein, in a first step, a material of the second domain (2) is removed by abrasive flow machining, and, in a second step, a material of the first domain (1) is removed.

11. Use of abrasive flow machining for the removal of a support structure (10) according to one of Claims 1 to 5 in the additive manufacture of components (100).

## Patentansprüche

1. Stützstruktur (10) für einen Pulverbettfertigungsprozess, umfassend eine erste Domäne (1) mit einer ersten Dichte und eine zweite Domäne (2) mit einer zweiten Dichte, wobei ein Material der zweiten Domäne (2) eine vorbestimmte Porosität umfasst, sodass die zweite Dichte niedriger als die erste Dichte ist, wobei die erste Domäne (1) angeordnet ist, um ein Stützgerüst der Stützstruktur (10) bereitzustellen, während sich die zweite Domäne (2) in den Zwischenräumen des Gerüsts erstreckt und einen abreibbaren Füllstoff bereitstellt, wobei das Material der ersten Domäne (1) und das Material der zweiten Domäne (2) Feststoffkörper sind und wobei die erste Domäne (1) und die zweite Domäne (2) so angeordnet und ausgelegt sind, dass die Stützstruktur (10) von einer anhaftenden Komponente (100) durch Strömungsschleifen entfernt werden kann.

2. Stützstruktur (10) nach Anspruch 1, wobei das Material der zweiten Domäne (2) eine größere Porosität umfasst als ein Material der ersten Domäne (1).

3. Stützstruktur (10) nach einem der vorhergehenden Ansprüche, wobei die erste Domäne an einer Außenseite der Stützstruktur angeordnet ist und die zweite Domäne innerhalb der ersten Domäne angeordnet ist.

4. Stützstruktur (10) nach einem der vorhergehenden Ansprüche, wobei ein Material der ersten Domäne und ein Material der zweiten Domäne der Stützstruktur (10) miteinander gemischt sind.

5. Stützstruktur (10) nach einem der vorhergehenden Ansprüche, wobei die erste Domäne (1) in einer Maschenstruktur angeordnet ist.

6. Verfahren zum Bereitstellen einer Stützstruktur (10) für einen Pulverbettfertigungsprozess nach einem der vorhergehenden Ansprüche, umfassend Aufbauen der Stützstruktur (10) auf einer Basisplattform (50), wobei die erste Domäne (1) und die zweite Domäne (2) durch Sintern aufgebaut werden, wie etwa durch selektives Lasersintern.

7. Verfahren nach Anspruch 6, wobei ein Material der ersten Domäne mit anderen Sinterparametern gesintert wird, wie etwa einer höheren Sintertemperatur und/oder einem größeren Druck, als ein Material der zweiten Domäne.

8. Verfahren zur additiven Fertigung einer Komponente (100) durch einen Pulverbettprozess, das Folgendes umfasst:
- Bereitstellen einer Stützstruktur (10) nach Anspruch 6 oder 7,
- additives Aufbauen der Komponente (100) durch den Pulverbettprozess auf der Stützstruktur (10), und
- Entfernen der Stützstruktur (10) durch Strömungsschleifen.

9. Verfahren nach Anspruch 8, wobei das Strömungsschleifen ein unter Druck stehendes Fluid zum Abschleifen eines Materials der Stützstruktur (10) verwendet.

10. Verfahren nach Anspruch 8 oder 9, wobei, in einem ersten Schritt, ein Material der zweiten Domäne (2) durch Strömungsschleifen entfernt wird, und, in einem zweiten Schritt, ein Material der ersten Domäne (1) entfernt wird.

11. Verwendung von Strömungsschleifen für die Entfernung einer Stützstruktur (10) nach einem der Ansprüche 1 bis 5 in der additiven Fertigung von Komponenten (100).

## Revendications

1. Structure (10) de support pour un procédé de fabrication à lit de poudre, comprenant un premier domaine (1) ayant une première masse volumique et un deuxième domaine (2) ayant une deuxième masse volumique, dans laquelle un matériau du deuxième domaine (2) a une porosité déterminée à l'avance, de manière à ce que la deuxième masse volumique soit plus petite que la première masse volumique, dans laquelle le premier domaine e (1) est agencé pour procurer un échafaudage supportant de la structure (10) de support, tandis que le deuxième domaine (2) s'étend dans des intervalles de l'échafaudage et procure une charge pouvant être abrasée le matériau du premier domaine (1) et le matériau du deuxième domaine (2) étant des corps massifs, et dans laquelle le premier domaine (1) et le deuxième domaine (2) sont disposés et configurés de manière à pouvoir retirer la structure (10) de support d'un composant (100) collé par usinage par flux abrasif.

2. Structure (10) de support suivant la revendication 1, dans laquelle le matériau du deuxième domaine (2) a une porosité plus grande qu'un matériau du premier domaine (1).

3. Structure (100) de support suivant l'une des revendications précédentes, dans laquelle le premier domaine est disposé à l'extérieur de la structure de support et le deuxième domaine est disposé à l'intérieur du premier domaine.

4. Structure (100) de support suivant l'une des revendications précédentes, dans laquelle un matériau du premier domaine et un matériau du deuxième domaine de la structure (10) de support sont mélangés ensemble.

5. Structure (100) de support suivant l'une des revendications précédentes, dans lequel le premier domaine (1) est agencé en un maillage.

6. Procédé pour procurer une structure (10) de support à un procédé de fabrication à lit de poudre suivant l'une des revendications précédentes, comprenant ériger la structure (10) de support sur une plateforme (50) de base, le premier domaine (1) et le deuxième domaine (2) étant érigés par frittage, tel que par frittage laser sélectif.

7. Procédé suivant la revendication 6, dans lequel on fritte le premier domaine à des paramètres de frittage différents, tel qu'à une température de frittage plus haute et/ou à une pression plus haute qu'un matériau du deuxième domaine.

8. Procédé de fabrication par addition d'un composant (100) par un procédé à lit de poudre, comprenant :
- se procurer une structure (10) de support suivant la revendication 6 ou 7,
- ériger par addition le composant (100) par le procédé à lit de poudre sur la structure (10) de support, et
- éliminer la structure (10) de support par usinage à flux abrasif.

9. Procédé suivant la revendication 8, dans lequel l'usinage à flux abrasif utilise un fluide sous pression pour une abrasion d'un matériau de la structure (10) de support.

10. Procédé suivant la revendication 8 ou 9, dans lequel, dans un premier stade, on élimine un matériau du deuxième domaine (2) par usinage par flux abrasif, et dans un deuxième stade, on élimine un matériau du premier domaine (1).

11. Utilisation d'un usinage par flux abrasif pour l'élimination d'une structure (10) de support suivant l'une des revendications 1 à 3 dans la fabrication additive de composants (100).
